# FASCICULE DE BREVET EUROPEEN

(11) **EP 0 639 486 B1**
(45) Date de publication et mention de la délivrance du brevet: **16.07.1997**
(21) Numéro de dépôt: 94401853.0
(22) Date de dépôt: 12.08.1994
(51) Int. Cl.: B60R 25/10, H04M 11/04, H04Q 7/32

(54) **Système d'alarme pour une station de radiocommunication mobile**
Alarmsystem für eine mobile Funkstation
Alarm system for a mobile radio station

(30) Priorité: 16.08.1993 FR 9310006
(43) Date de publication de la demande: 22.02.1995
(73) Titulaire: ALCATEL MOBILE COMMUNICATION FRANCE, 75008 Paris (FR)
(72) Inventeur: Addra, Modeste, F-91590 La Ferte-Alais (FR); Labbe, Laurent, F-92360 Meudon-La-Foret (FR)
(74) Mandataire: Pothet, Jean Rémy Emile Ludovic

(56) Documents cités:
- EP-A- 0 476 390
- US-A- 5 218 367
- MOTOROLA TECHNICAL DEVELOPMENTS, vol.15, Mai 1992, SCHAUMBURG, ILLINOIS US pages 21 - 22 BOSCH 'Credid-card encryption with key storage'
- ECHO DES RECHERCHES, no.139, 1990, ISSY/MOULINEAUX, FR pages 13 - 20 JOLIE ET AL. 'Une application de la carte à microprocesseur: le module d'identité d'abonné du radiotéléphone numérique européen'

## Description

La présente invention concerne une station mobile d'un système de radiocommunications, tel que le système de radiocommunications cellulaire GSM. Elle concerne plus particulièrement, mais non exclusivement, une station mobile constituée d'un radiotéléphone qualifié de "mobile", c'est-à-dire installé à demeure dans un véhicule mobile. L'expression "station mobile" désigne de manière générale un radiotéléphone portable, portatif ou mobile.

Dans certains systèmes de radiocommunications, et notamment dans les systèmes analogiques, cellulaires ou non, chaque station mobile est personnalisée, c'est-à-dire est-à-dire :
- qu'elle contient des données spécifiques relatives à un abonné prédéterminé autorisé à l'utiliser, ces données étant mémorisées dans la station,
- qu'elle comporte, de manière intrinsèque, c'est-à-dire installés à demeure, de manière fixe et permanente, des moyens d'identification d'un utilisateur, permettant de vérifier que ce dernier est autorisé à l'utiliser.

La personnalisation est nécessaire étant donné que, contrairement aux systèmes filaires, on ne trouve pas dans les systèmes de radiocommunications un moyen de transmission unique par abonné.

Pour utiliser une telle station mobile d'un tel système de radiocommunications en vue d'émettre ou de recevoir des données de parole, ou autres, l'utilisateur peut d'abord, après avoir mis la station mobile sous tension, composer un code d'accès secret, faisant partie des données spécifiques mémorisées. Les moyens d'identification vérifient alors que le code composé est identique aux données mis en mémoire, c'est-à-dire que l'utilisateur est un utilisateur autorisé. Toutefois, la validation par code d'accès secret est une option au choix de l'utilisateur ; si cette option n'est pas prise, n'importe qui peut utiliser la station mobile sans aucune protection de cette dernière.

Des stations mobiles de ce type peuvent être utilisés afin d'avertir un ou plusieurs abonnés (d'un réseau de communications filaire ou radio), respectivement associés à des numéros d'appel mis en mémoire, en cas d'intrusion dans le véhicule dans lequel est installé la station mobile. Dans ce but, un logiciel de pilotage de la station mobile, associé à un microprocesseur, est conçu pour piloter la station mobile lors de son utilisation comme moyen d'alarme. On dit alors que la station mobile peut fonctionner en mode alarme.

A ce sujet, le brevet US 5 218 367 traite de la localisation d'un véhicule à la suite d'une intrusion frauduleuse dans ce véhicule.

Plus généralement, on appellera mode automatique un mode de fonctionnement de la station mobile, tel que le mode alarme, dans lequel cette dernière est susceptible, à la suite d'un événement extérieur suspect, ou premier événement, d'émettre un appel de manière automatique.

On appellera mode normal le mode de fonctionnement de la station mobile dans lequel cette dernière est utilisée conventionnellement par un abonné pour entrer en communication avec un abonné d'un système de communications filaire ou radio.

En pratique, la station mobile est en permanence connectée électriquement à la batterie du véhicule, sans être mise sous tension, lorsqu'elle n'est pas utilisée.

En mode alarme, lorsqu'une intrusion dans le véhicule est détectée par un capteur quelconque relié au système d'alimentation de la station mobile, cette dernière est automatiquement mise sous tension, se connecte au système de radiocommunications auquel elle appartient, compose le ou les numéros mis en mémoire, puis transmet un message ou appel d'alarme (par exemple un "bip" répété plusieurs fois) aux abonnés à avertir.

Dans ce type de stations mobiles, il est supposé qu'il soit possible d'émettre une communication sans qu'il soit nécessaire de composer le code d'accès secret. Cette faculté provient du fait que le code d'accès est mis en mémoire au sein du microprocesseur de gestion et de commande de la station mobile, et que les moyens d'identification sont intrinsèques à la station mobile. Il est par conséquent possible de concevoir le logiciel pilotant le mode alarme de telle manière que l'une des opérations du mode alarme consiste soit à chercher en mémoire le code d'accès secret et à le fournir aux moyens d'identification, soit à passer outre la vérification de ce code d'accès.

Toutes les opérations exécutées en mode alarme sont par conséquent déclenchées de manière automatique après détection de l'intrusion, c'est-à-dire qu'elles ne nécessitent pas d'intervention extérieure. Elles sont en général effectuées de manière transparente pour un observateur extérieur.

Dans un deuxième type de systèmes de radiocommunications, et notamment dans le système GSM, les stations mobiles sont également personnalisées. Toutefois, le système de personnalisation est différent : les moyens d'identification et les données spécifiques relatives à l'abonné ne sont pas intrinsèques au radiotéléphone.

Ainsi, une station mobile GSM comprend deux sous-ensembles :
- un premier sous-ensemble, que l'on appellera sous-ensemble d'émission et de réception, comprenant notamment et de manière schématique un émetteur/récepteur et un microprocesseur de gestion et de commande dans lequel est incorporé un logiciel de pilotage adapté pour assurer la gestion de l'émission et de la réception de communications,
- un deuxième sous-ensemble, que l'on appellera module d'identification d'abonné, qui contient dans sa mémoire propre et indépendante de celle du sous-ensemble d'émission et de réception, des données spécifiques relatives à l'abonné (telles que des données permettant de connaître son identité afin de savoir à qui attribuer le paiement des montants correspondant à chaque communication) et qui comporte des moyens d'identification ; ce sous-ensemble est dénommé SIM (pour Subscriber Identity Module) dans la terminologie GSM.

A titre de référence, les principales caractéristiques du module SIM sont décrites dans l'article "Une application de la carte à microprocesseur...", Jolie et al., L'Echo des Recherches n° 139, pages 13-20, 1990.

Le SIM peut être constitué soit d'une carte à puce de taille classique, soit d'une carte à puce de taille réduite. Il peut être amovible ou fixé dans la station mobile. Ainsi, au lieu d'être mises en mémoire de manière permanente au sein du microprocesseur de gestion et de commande de la station mobile, les données spécifiques relatives à l'abonné sont contenues dans un organe séparé et indépendant.

Le SIM est protégé, de la même manière que dans les systèmes de radiocommunications précédemment décrits, par un code d'accès secret, ou PIN (Personal Identity Number) code, comparable à celui utilisé dans le domaine des cartes de crédit. Ce code d'accès est mis en mémoire dans le SIM (il fait partie des données spécifiques).

Pour qu'une communication puisse être établie à partir de la station mobile, il faut bien entendu que cette dernière soit mise sous tension (de manière à être alimentée par une batterie interne à la station mobile, ou par la batterie du véhicule lorsque la station mobile est un radiotéléphone mobile), et il faut également que le SIM soit validé, c'est-à-dire que l'utilisateur compose le code secret et que le SIM vérifie alors que la station mobile est utilisée par un utilisateur autorisé par comparaison des données mémorisées dans le SIM et du code secret.

Cette dernière opération, appelée validation du SIM, est nécessaire après chaque mise sous tension de la station mobile. Toutefois, l'abonné peut, s'il le souhaite, ne pas utiliser la protection par validation. Dans ce cas, le SIM est validé en permanence, même lorsque la station mobile est mise hors tension puis remise sous tension ensuite.

Cependant, si la protection par validation n'est pas choisie, il est possible à n'importe quelle personne d'utiliser la station mobile en faisant attribuer le paiement du montant des communications à l'abonné identifié par le SIM.

Si l'on souhaite utiliser une station mobile du deuxième type décrit en mode automatique, et plus particulièrement en mode alarme, plusieurs problèmes se posent.

On comprend bien en effet que la transposition directe du fonctionnement en mode alarme utilisé dans les systèmes dans lesquels les stations mobiles comportent des moyens d'identification intrinsèques n'est pas possible dans les systèmes de radiocommunications du deuxième type décrit.

En effet, le code d'accès secret n'étant pas mis en mémoire au sein du microprocesseur de gestion et de commande, et étant protégé pour des raisons de sécurité (de même que dans le domaine des cartes de crédit), le logiciel pilotant le mode alarme ne peut y avoir accès pour émettre une communication en mode alarme.

Il n'est pas non plus possible de mettre en mémoire dans le microprocesseur ce code d'accès secret, d'une part pour des raisons de sécurité, et d'autre part car cela est interdit notamment par le norme GSM.

Deux solutions peuvent alors être envisagées.

La première de ces solutions consiste à laisser la station mobile en permanence sous tension après avoir validé le SIM. Ainsi, lorsqu'une intrusion est détectée, le SIM étant validé, l'appel d'alarme peut être émis par la station mobile.

Cette première solution entraîne une consommation très importante d'énergie par les moyens d'émission et de réception dans la station et donc une faible autonomie de la batterie alimentant la station. Le fait de laisser quelques jours la station mobile en mode alarme risque ainsi de décharger entièrement la batterie, notamment lorsque la station est disposée dans une zone géographique à couverture de faible puissance radioélectrique. Dans ce cas en effet, la station tente durablement de "s'accrocher" à un canal radioélectrique qui est reçu avec une trop faible puissance, ce qui a pour résultat de diminuer son autonomie compte tenu de l'intensité de l'activation des moyens d'émission et de réception.

En outre, n'importe qui, et en particulier la personne qui s'est introduite dans le véhicule, peut utiliser la station mobile sans avoir à valider le SIM, et le paiement du montant des communications passées sera attribué à l'abonné identifié par le SIM.

Cette première solution n'est donc pas satisfaisante.

La deuxième solution consiste, pour l'abonné, à ne pas utiliser la faculté qu'il a de protéger le SIM par validation. Ainsi, en mode alarme, l'appel d'alarme peut être émis sans validation préalable.

Cette solution présente l'inconvénient majeur de ne pas empêcher l'utilisation par n'importe qui de la station mobile ou le vol de la carte SIM déjà validée et donc utilisable avec n'importe quel poste, avec paiement du montant des communications attribué à l'abonné identifié par le SIM.

Cette deuxième solution n'est donc pas non plus satisfaisante.

Compte tenu des inconvénients présentés par les deux solutions précédentes, on n'emploie pas, actuellement, de stations mobiles sans moyens intrinsèques d'identification comme moyens d'alarme à distance.

Le but de la présente invention est donc de mettre au point une station mobile munie d'un organe d'identification séparé et indépendant, capable d'émettre des appels de manière automatique, notamment pour assurer un fonctionnement en mode alarme, sans entraîner une consommation importante d'énergie et tout en restant protégée contre une utilisation non autorisée.
La présente invention propose à cet effet une station mobile appartenant à un système de radiocommunications et émettant, dans un premier mode de fonctionnement, au moins un message de demande d'établissement de connexion en réponse à des premiers événements, ledit au moins un message étant émis à travers des moyens d'émission et de réception dans la station, lesdits moyens d'émission et de réception étant en mesure d'émettre si et seulement si, d'une part, ils sont alimentés et, d'autre part, un module d'identification d'abonné est validé en réponse à une comparaison positive entre des données mémorisées dans ledit module et un code composé. La station est caractérisée en ce qu'elle comprend des moyens pour alimenter sélectivement chacun desdits moyens d'émission et de réception et module, de telle sorte que dans ledit premier mode de fonctionnement, ledit module est alimenté en permanence pour être maintenu validé et lesdits moyens d'émission et de réception sont alimentés en réponse auxdits premiers événements pour émettre ledit au moins un message.
De préférence, les moyens pour alimenter sélectivement chacun desdits moyens d'émission et de réception et module comprennent des premier et second dispositifs d'alimentation et un moyen de commutation, lequel moyen de commutation est commandé pour activer, respectivement désactiver, chacun desdits premier et second dispositifs d'alimentation pour alimenter, respectivement mettre hors tension, l'un respectif desdits moyens d'émission et de réception et module.

En assurant une alimentation séparée du module d'identification et des moyens d'émission et de réception, on peut éviter les inconvénients présentés par les deux solutions présentées précédemment. En effet, si le module d'identification reste en permanence sous tension, il n'est pas nécessaire d'avoir à le valider pour le fonctionnement en mode automatique. Etant donné que l'alimentation du module d'identification consomme environ 500 fois moins d'énergie que l'alimentation des moyens d'émission et de réception, il n'est pas gênant, par exemple pour la batterie du véhicule dans lequel la station mobile est installée, de laisser en permanence le module d'identification sous tension.
Selon un mode de mise en oeuvre particulièrement avantageux de la présente invention,la station mobile comprend, en outre, un microprocesseur associé auxdits et alimenté communément avec lesdits moyens d'émission et de réception, et des moyens de capteur sensibles auxdits premiers événements, ledit microprocesseur étant alimenté en réponse auxdits premiers événements et en réponse à des seconds événements, et mettant en oeuvre dès qu'il est alimenté un traitement défini par les deux alternatives suivantes:
. si le microprocesseur reçoit un signal de détection de l'un desdits premiers événements en provenance desdits moyens de capteur, ledit microprocesseur commande l'émission dudit message de demande d'établissement à travers lesdits moyens d'émission et de réception,
. si le microprocesseur ne reçoit pas un signal de détection de l'un desdits premiers événements en provenance desdits moyens de capteur, ledit microprocesseur commande lesdits moyens pour alimenter sélectivement afin de mettre hors tension le module, de sorte que ledit module ne soit plus validé, et doive être à nouveau alimenté et validé pour que les moyens d'émission et de réception soient en mesure d'émettre et recevoir.

Ce mode de mise en oeuvre permet d'éviter qu'un utilisateur non autorisé profite du fait que le module d'identification est sous tension, et donc validé, pour passer des communications à l'aide de la station mobile sur le compte de l'abonné identifié par le SIM.

La station mobile offre néanmoins un mode de fonctionnement conventionnel selon lequel lesdits moyens d'émission et de réception et ledit module sont tous deux alimentés. Des données peuvent être émises et reçus à travers lesdits moyens d'émission et de réception dès lors que ledit module est validé.

D'autres caractéristiques et avantages de la présente invention apparaîtront dans la description suivante d'un mode de mise en oeuvre particulier d'une station mobile selon l'invention, donnée à titre illustratif et non limitatif.

Dans les figures suivantes :
- la figure 1 représente de manière très schématique les éléments principaux dans une station mobile selon la présente invention,
- la figure 2 est un schéma synoptique illustrant les principales opérations effectuées par le microprocesseur de gestion et de commande d'une station mobile selon l'invention en mode normal,
- la figure 3 est un schéma synoptique illustrant les principales opérations effectuées par le microprocesseur de gestion et de commande d'une station mobile selon l'invention en mode alarme.

Dans toutes ces figures, les éléments communs portent les mêmes numéros de référence.

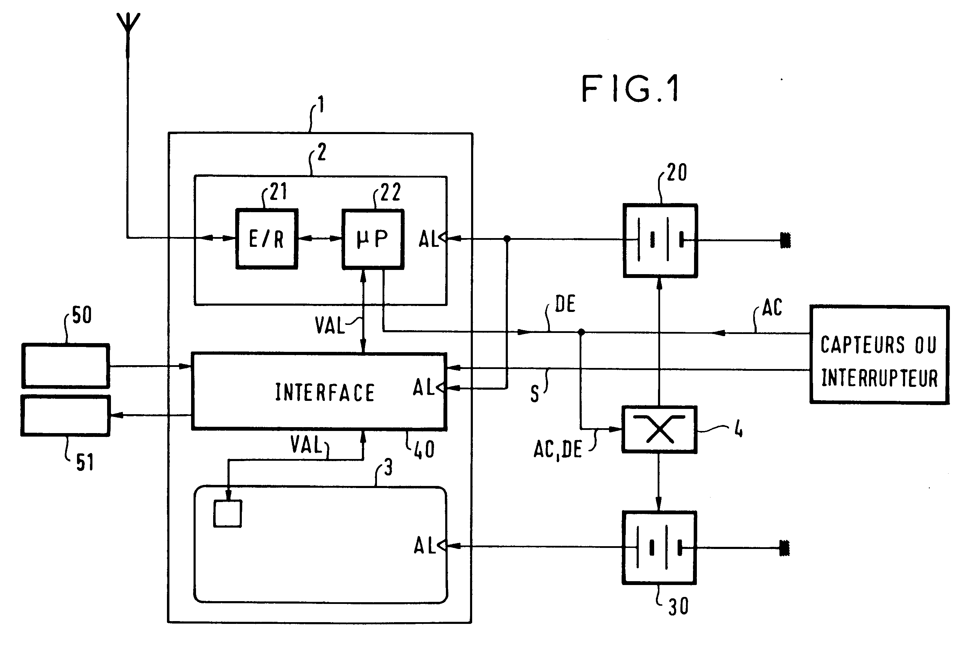

Une station mobile 1 selon l'invention, par exemple un radiotéléphone mobile, est représentée en figure 1. Elle comprend notamment une unité d'émission et de réception 2, un module d'identification d'abonné, ou SIM, 3 et une interface 40.

L'unité 2 comprend un microprocesseur 22 de gestion et de commande du radiotéléphone 1, ainsi qu'un émetteur/récepteur radio 21.

L'unité 2 et l'interface 40 recoivent chacune sur une entrée d'alimentation respective AL une sortie d'un premier dispositif d'alimentation 20, appartenant par exemple à la batterie d'un véhicule (non représenté) dans lequel le radiotéléphone 1 est installé.

Le module 3 reçoit sur une entrée d'alimentation AL une sortie d'un second dispositif d'alimentation 30, qui appartient par exemple également à la batterie du véhicule dans lequel le radiotéléphone 1 est installé.

Les dispositifs 20 et 30 font partie d'un circuit électrique d'alimentation des unité 2 et module 3 qui comporte en outre un commutateur 4. Ce commutateur 4 est commandé pour sélectivement activer ou désactiver chacun des deux dispositifs 20 et 30 de sorte que l'ensemble unité 2 et interface 40 d'une part, et le module 3 d'autre part, puissent chacun sélectivement être alimenté ou mis hors tension. On ne décrira pas plus en détail le circuit électrique permettant d'assurer une telle alimentation séparée des ensemble 2 et 40 et module 3 ainsi que la commutation entre un mode d'alimentation combinée, dans lequel les dispositifs 20 et 30 sont tous deux activés, et un mode d'alimentation simple, dans lequel seul le dispositif 30 est activé, la conception d'un tel circuit étant à la portée de l'homme de l'art.

Ainsi, l'ensemble 2 et 40 et le module 3 dans le radiotéléphone 1 sont respectivement alimentés par deux dispositifs d'alimentation distincts 20 et 30.

Pour son utilisation en mode normal ou conventionnel, dit premier mode de fonctionnement, le radiotéléphone selon l'invention offre un fonctionnement nécessaire à l'établissement de communications qui sont soit reçues, soit émises à la demande de l'utilisateur. Pour ce mode normal, les deux dispositifs d'alimentation 20 et 30 sont activés.

Le radiotéléphone 1 peut comporter un interrupteur permettant d'activer les dispositifs 20 et 30 en même temps, ou deux interrupteurs séparés, un pour chaque dispositif d'alimentation 20 et 30.

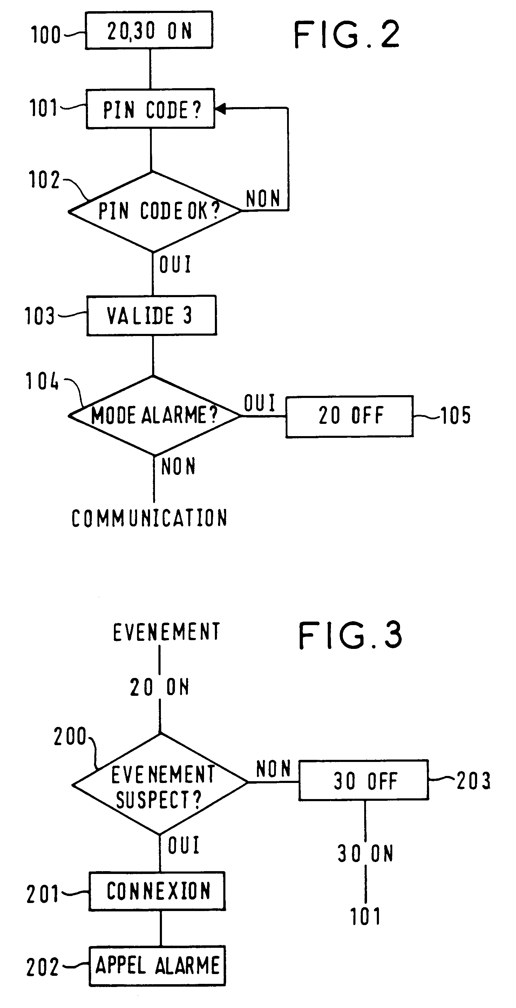

Après mise sous tension de l'ensemble 2 et 40 et du module 3 (20, 30 ON - étape 100, figure 2), il est demandé à l'utilisateur, au moyen d'un dispositif d'affichage 51, de composer un code d'accès secret ou PIN code (PIN CODE? - étape 101) sur un clavier 50, les dispositif d'affichage et clavier étant tous deux connectés à l'interface 40. Après composition du code par l'utilisateur, le module 3 également connecté à l'interface 40, effectue une comparaison entre le code composé et des données mémorisées dans sa mémoire (PIN CODE OK? - étape 102), pour vérifier que l'utilisateur est un utilisateur autorisé.

Dans le cas d'une comparaison négative, il est demandé de nouveau à l'usager de composer un code secret.

Dans le cas d'une comparaison positive, le module 3 est validé (VALIDE 3 - étape 103) et un état de validation VAL est transmis, à travers l'interface 40, d'un microcircuit dans le module 3 vers le microprocesseur 22. Dès réception de cet état de validation VAL par le microprocesseur 22, ce dernier demande alors à l'utilisateur, à travers le dispositif d'affichage 51, s'il souhaite utiliser le radiotéléphone 1 en mode alarme (MODE ALARME? étape 104).

Dans le cas d'une réponse négative de l'utilisateur, le radiotéléphone fonctionne en mode normal : l'utilisateur peut passer des communications, les deux dispositifs d'alimentation 20 et 30 étant maintenus activés.

Dans le cas d'une réponse positive de l'utilisateur, le dispositif d'alimentation 20 est desactivé pour mettre hors tension l'ensemble 2 et 40. Pour cette désactivation, le microprocesseur 22 transmet un signal DE qui est reçu par le moyen de commutation 4, lequel désactive le dispositif 20. En revanche, l'alimentation du module 3 au moyen du dispositif 30 est maintenue. Ainsi, le module 3 n'ayant pas été mis hors tension, il reste validé par la validation décrite précédemment et effectuée par l'utilisateur après la mise sous tension du radiotéléphone 1.

Lorsque survient soit un événement extérieur suspect, ou premier événement, qui a été choisi lors de la conception du mode alarme pour déclencher l'émission d'un appel d'alarme et qui est détecté par un capteur (par exemple, l'ouverture d'une portière du véhicule, ou d'une fenêtre, ou bien encore un choc violent sur le véhicule), soit tout autre événement, dit second événement, conduisant à l'activation du dispositif 20 (par exemple l'activation par un utilisateur du radiotéléphone 1), le dispositif 20 est activé (20 ON, figure 3), de sorte que le sous-ensemble 2 est mis sous tension. La détection par un capteur d'un premier événement se traduit par un signal de détection AC à l'état haut appliqué à une entrée de commande du moyen de commutation 4, lequel signal AC active le dispositif 20. Lorsque le dispositif 20 est activé, le microprocesseur 22 est alimenté, ce qui provoque une réinitialisation de ce dernier.

Immédiatement en réponse à cette initialisation, le microprocesseur 22 n'est pas en mesure d'établir si l'alimentation qui a provoqué cette réinitialisation résulte d'un premier événement ou un second événement. L'émission d'un appel d'alarme en résultat de la mise sous tension de l'ensemble 2 et 40 par un utilisateur autorisé, doit en effet être évitée.

Le microprocesseur 22 cherche alors si l'événement ayant conduit à l'activation du dispositif 20 est un événement suspect (EVENEMENT SUSPECT? - étape 200). Pour cela, il est prévu que les signaux de détection AC produits par les capteurs et destinés à commander le moyen de commutation 4, soient également reçus par le microprocesseur 22.

Lors de son initialisation, si le microprocesseur 22 reçoit un signal de détection AC à l'état haut en provenance d'un capteur, alors, sachant que le module 3 est validé, le microprocesseur opère pour que le radiotéléphone 1 se connecte au système de radiocommunications auquel il appartient (CONNEXION - étape 201), puis émette de manière automatique (par pilotage au moyen du logiciel de pilotage incorporé au sein du microprocesseur 22) au mois une demande d'établissement de connexion pour établir au moins un appel d'alarme (APPEL ALARME - étape 202) à l'attention d'un abonné identifié par son numéro de téléphone et préalablement mis en mémoire, par exemple au sein du microprocesseur 22. L'appel d'alarme peut être constitué d'une succession de "bips", ou bien encore d'un message préalablement enregistré. Il peut être prévu d'émettre plusieurs appels d'alarme.

Dans le cas où le radiotéléphone est utilisé pour servir de moyen d'alarme dans une maison par exemple, l'un des numéros d'appel automatiquement composés par le radiotéléphone en cas d'alarme peut être par exemple celui de la police.

Ainsi, grâce à l'invention, il est possible d'utiliser un radiotéléphone en mode alarme, ou dans tout autre mode automatique fonctionnant selon un principe similaire, c'est-à-dire dans lequel le radiotéléphone se connecte automatiquement au système de radiocommunications auquel il appartient puis émet automatiquement un appel, sans entraîner une consommation importante d'énergie puisque seul le module 3, qui consomme 500 fois moins d'énergie que le sous-ensemble 2, reste en permanence sous tension.

Par ailleurs, et selon un mode de mise en oeuvre particulièrement avantageux de la présente invention, on prévoit que, lorsque le radiotéléphone 1 est en mode alarme, seul le module 3 étant alimenté par le dispositif 30, si le sous-ensemble 2 est mis sous tension autrement qu'à la suite d'un événement extérieur suspect, le module 3 est automatiquement mis hors tension (30 OFF - étape 203), de sorte que pour émettre des communications, le module 3 doit être alimenter de nouveau (30 ON). Les étapes suivantes sont identiques aux étapes 101 à 105. Le microprocesseur 22 établit qu'un événement est un événement autre qu'un événement suspect dès lors qu'il ne reçoit pas un signal de détection AC à l'état haut en provenance d'un capteur immédiatement après sa réinitialisation. La mise hors tension du dispositif 30 est commandée par le microprocesseur 22 qui pour cela transmet un signal de désactivation DE appliqué à l'entrée de commande du moyen de commutation 4, lequel désactive le moyen d'alimentation 30.

Ainsi, il n'est pas possible à une personne non autorisée de profiter du fait que le module 3 est en permanence alimenté et donc validé pour émettre des communications en faisant attribuer le paiement à l'abonné autorisé.

Le radiotéléphone selon l'invention permet donc de résoudre tous les problèmes posés par l'art antérieur.

Il est bien évident que le logiciel de pilotage du radiotéléphone de l'art antérieur doit être modifié pour permettre le fonctionnement selon l'invention. Une telle modification est à la portée de l'homme de l'art. Il est également possible d'employer un logiciel indépendant pour le fonctionnement en mode automatique selon l'invention.

Bien entendu, l'invention n'est pas limitée au mode de réalisation qui vient d'être décrit.

En premier lieu, une station mobile selon l'invention peut être utilisée dans n'importe quel système de radiocommunications dans lequel l'identification de l'utilisateur est effectuée à l'aide d'un organe séparé et indépendant qui n'appartient pas de manière intrinsèque à la station mobile mais qui y est rapporté et qui possède une mémoire indépendante par rapport à celle du microprocesseur de gestion et de commande de la station mobile.

D'autre part, une station mobile selon l'invention peut être utilisée dans n'importe quel mode automatique du même type que le mode alarme.

Elle peut être employée non seulement comme moyen d'alarme en relation avec un véhicule, mais également dans une maison ou en relation avec tout autre dispositif à protéger et capable d'être muni d'une station mobile.

L'invention ne s'applique pas seulement aux radiotéléphones mobiles, mais elle peut également s'appliquer aux radiotéléphones portatifs et portables, si ces derniers peuvent être adaptés pour être raccordés à un dispositif de détection des événements susceptibles de déclencher le mode automatique. Dans le cas des radiotéléphones portables ou portatifs, on peut alors prévoir au sein du radiotéléphone lui-même deux dispositifs d'alimentation autonomes et séparés.

Enfin, on pourra remplacer tout moyen par un moyen équivalent sans sortir du cadre de l'invention.

## Revendications

1. Station mobile (1) appartenant à un système de radiocommunications et émettant, dans un premier mode de fonctionnement, au moins un message de demande d'établissement de connexion en réponse à des premiers événements, ledit au moins un message étant émis à travers des moyens d'émission et de réception (21) dans la station (1), lesdits moyens d'émission et de réception (21) étant en mesure d'émettre et de recevoir si et seulement si, d'une part, ils sont alimentés et, d'autre part, un module d'identification d'abonné (3) est validé en réponse à une comparaison positive entre des données mémorisées dans ledit module et un code composé,
caractérisée en ce qu'elle comprend des moyens (20,30,4) pour alimenter sélectivement chacun desdits moyens d'émission et de réception (21) et module (3), de sorte que dans ledit premier mode de fonctionnement, ledit module (3) est alimenté en permanence pour être maintenu validé et lesdits moyens d'émission et de réception (21) sont alimentés en réponse auxdits premiers événements pour émettre ledit au moins un message.

2. Station mobile (1) conforme à la revendication 1, caractérisée en ce que les moyens (20,30,4) pour alimenter sélectivement chacun desdits moyens d'émission et de réception (21) et module (3) comprennent des premier et second dispositifs d'alimentation (20,30) et un moyen de commutation (4), lequel moyen de commutation (4) est commandé pour activer, respectivement désactiver, chacun desdits premier et second dispositifs d'alimentation (20,30) pour alimenter, respectivement mettre hors tension, l'un respectif desdits moyens d'émission et de réception (21) et module (3).

3. Station mobile (1) conforme à la revendication 1 ou 2, caractérisée en ce qu'elle comprend, en outre, un microprocesseur (22) associé et alimenté communément avec lesdits moyens d'émission et de réception (21), et des moyens de capteur sensibles auxdits premiers événements, ledit microprocesseur (22) étant alimenté en réponse auxdits premiers événements et en réponse à des seconds événements, et mettant en oeuvre dès qu'il est alimenté un traitement défini par les deux alternatives suivantes:
. si le microprocesseur (22) reçoit un signal de détection de l'un desdits premiers événements en provenance desdits moyens de capteur, ledit microprocesseur (22) commande l'émission dudit message de demande d'établissement à travers lesdits moyens d'émission et de réception (21),
. si le microprocesseur (22) ne reçoit pas un signal de détection de l'un desdits premiers événements en provenance desdits moyens de capteur, ledit microprocesseur (22) commande lesdits moyens pour alimenter sélectivement (20,30,4) afin de mettre hors tension le module (3), de sorte que ledit module ne soit plus validé, et doive être à nouveau alimenté et validé pour que les moyens d'émission et de réception soient en mesure d'émettre et recevoir.

4. Station mobile (1) conforme à l'une quelconque des revendications 1 à 3, caractérisé par un second mode de fonctionnement de ladite station (1) selon lequel lesdits moyens d'émission et de réception (21) et ledit module (3) sont tous deux alimentés, des données pouvant être émises et reçues à travers lesdits moyens d'émission et de réception (21) dès lors que ledit module (3) est validé.

## Claims

1. A mobile station (1) belonging to a radiocommunications system and responding, in a first operating mode, to first events by transmitting at least one connection set-up request message, said at least one message being transmitted via transmit and receive means (21) in the station (1), said transmit and receive means (21) being suitable for transmitting and receiving if and only if firstly they are powered, and secondly a subscriber identity module (3) is enabled in response to a positive result to comparison made between data stored in said module and an entered code;
said mobile station being characterized in that it includes selective powering means (20, 30, 4) for selectively powering said module (3) and said transmit and receive means (21), so that, in said first operating mode, said module (3) is powered permanently so as to be maintained enabled, and said transmit and receive means (21) are powered in response to said first events so as to transmit said at least one message.

2. A mobile station (1) according to claim 1, characterized in that the means (20, 30, 4) for selectively powering said module (3) and said transmit and receive means (21) comprise first and second power supply devices (20, 30), and switching means (4), which switching means (4) are controlled to activate or to deactivate respective ones of said first and second power supply devices (20, 30) so that said module (3) and said transmit and receive means (21) are respectively switched either on or off.

3. A mobile station (1) according to claim 1 or 2, characterized in that it further includes a microprocessor (22) associated with and powered in common with said transmit and receive means (21), and sensor means sensitive to said first events, said microprocessor (22) being powered in response to said first events, and in response to second events, and implementing processing as soon as it is switched on, which processing is defined by the following two alternatives:
if the microprocessor (22) receives from said sensor means a detection signal indicating that one of said first events has been detected, said microprocessor (22) causes said set-up request message to be transmitted via said transmit and receive means (21);
if the microprocessor (22) does not receive from said sensor means a detection signal indicating that one of said first events has been detected, said microprocessor (22) causes said selective powering means (20, 30, 4) to switch off the module (3), so that said module is no longer enabled, and so that it must be switched on and enabled again for the transmit and receive means to be capable of transmitting and receiving.

4. A mobile station (1) according to any one of claims 1 to 3, characterized by a second operating mode of said station (1), in which mode both said module (3) and said transmit and receive means (21) are switched on, it being possible for data to be transmitted and received via said transmit and receive means (21) provided that said module (3) is enabled.

## Patentansprüche

1. Zu einem Funksystem gehörende Mobilstation (1), die in einem ersten Betriebsmodus mindestens eine Nachricht der Anfrage nach der Herstellung einer Gesprächsverbindung als Antwort auf erste Ereignisse aussendet, wobei die mindestens eine Nachricht über Sende-/Empfangsmittel (21) in der Station (1) ausgesendet wird und die Sende-/Empfangsmittel (21) nur dann senden und empfangen können, wenn sie einerseits gespeist werden und wenn andererseits ein Teilnehmeridentifikationsmodul (3) als Antwort auf einen positiven Vergleich zwischen im Modul gespeicherten Daten und einem eingegebenen Kode validiert wird, dadurch gekennzeichnet, daß sie Mittel (20, 30, 4) aufweist, um selektiv die Sende-/Empfangsmittel (21) bzw. den Modul (3) zu speisen, so daß im ersten Betriebsmodus der Modul (3) permanent gespeist wird, um validiert zu bleiben, und die Sende-/Empfangsmittel (21) nur beim Auftreten der ersten Ereignisse gespeist werden, um die mindestens eine Nachricht auszusenden.

2. Mobilstation nach Anspruch 1, dadurch gekennzeichnet, daß die Mittel (20, 30, 4), um selektiv die Sende-/Empfangsmittel (21) bzw. den Modul (3) zu speisen, erste und zweite Speisevorrichtungen (20, 30) und ein Umschaltmittel (4) enthalten, das gesteuert wird, um die erste bzw. die zweite Speisevorrichtung (20, 30) zu aktivieren oder zu desaktivieren, um die Sende-/Empfangsmittel (21) oder den Modul (3) zu speisen bzw. die Speisung auszuschalten.

3. Mobilstation nach Anspruch 1 oder 2, dadurch gekennzeichnet, daß sie außerdem einen den Sende-/Empfangsmitteln (21) zugeordneten und gemeinsam mit ihnen gespeisten Mikroprozessor (22) und für die ersten Ereignisse empfindliche Meßsonden aufweist, wobei der Mikroprozessor (22) beim Auftreten der ersten Ereignisse und der zweiten Ereignisse gespeist wird, und dann eine von den beiden folgenden Alternativen definierte Verarbeitung anwendet:
. wenn der Mikroprozessor (22) ein Erfassungssignal eines der ersten Ereignisse von den Meßsonden empfängt, steuert er die Aussendung der Nachricht der Anforderung der Herstellung einer Verbindung über die Sende-/Empfangsmittel (21),
. wenn der Mikroprozessor (22) kein Signal der Erfassung eines der ersten Ereignisse von den Meßsonden empfängt, steuert er diese Mittel zur selektiven Speisung (20, 30, 4), um die Versorgung des Moduls (3) zu unterbrechen, so daß der Modul nicht mehr validiert ist und von neuem gespeist und validiert werden muß, damit die Sende-/Empfangsmittel senden und empfangen können.

4. Mobilstation nach einem beliebigen der Ansprüche 1 bis 3, gekennzeichnet durch einen zweiten Betriebsmodus der Station (1), gemäß dem sowohl die Sende-/Empfangsmittel (21) als auch der Modul (3) gespeist werden, wobei Daten über diese Sende-/Empfangsmittel (21) ausgesendet und empfangen werden können, sobald der Modul (3) validiert ist.
